# EUROPÄISCHE PATENTANMELDUNG

(11) **EP 2 413 414 A2**
(43) Veröffentlichungstag der Anmeldung: **01.02.2012**
(21) Anmeldenummer: 11005426.9
(22) Anmeldetag: 02.07.2011
(51) Int. Cl.: H01M 10/04

(54) **Pouchzelle mit Ableitern**

(30) Priorität: 27.07.2010 DE 102010032414
(71) Anmelder: ads-tec GmbH, 70771 Leinfelden-Echterdingen (DE)
(72) Erfinder:
(74) Vertreter: Wasmuth, Rolf

(57) **Zusammenfassung**

Die Erfindung betrifft eine Pouchzelle (20) mit wechselweise aufeinandergeschichteten Anodenfolien (1) und Kathodenfolien (2), die jeweils durch Separatorfolien (3) voneinander getrennt in einem Foliengehäuse (4) angeordnet sind. Die Anodenfolien (1) mehrerer Lagen und die Kathodenfolien (2) mehrerer Lagen sind mit je einem Ableiter (11, 12) verbunden, der jeweils einen Pol (9, 13) der Akkuflachzelle (20) bildet. Der Ableiter (11, 12) weist einen inneren, innerhalb des Foliengehäuses (4) mit den Anodenfolien (1) oder den Kathodenfolien (2) verbundenen inneren Abschnitt (8) sowie einen aus dem Foliengehäuse (4) herausgeführten äußeren Abschnitt (10) auf. Der Ableiter (12) der Kathodenfolien (2) besteht aus Aluminium und trägt eine Aluminiumoxidschicht, wobei in einem Bereich des äußeren Abschnitts (10) die Aluminiumoxidschicht des Ableiters (12) durch eine Beschichtung (18) aus einem elektrisch gut leitenden Material ersetzt ist, welches in der Spannungsreihe ein Potenzial aufweist, welches höher liegt als das Potenzial von Aluminium.

## Beschreibung

Die Erfindung betrifft eine Akkuflachzelle, insbesondere eine Pouchzelle nach dem Oberbegriff des Anspruchs 1.

Derartige Akkuflachzellen (Pouchzellen) sind allgemein bekannt und bestehen aus wechselweise aufeinandergeschichteten Anodenfolien und Kathodenfolien, die jeweils durch Separatorfolien voneinander getrennt in einem Foliengehäuse angeordnet sind. Das Foliengehäuse kann eine umlaufende Siegelnaht aufweisen, um eine im Foliengehäuse vorgesehene Elektrolytlösung dicht einzuschließen. Zur elektrischen Kontaktierung nach außen sind Ableiter vorgesehen, mit denen einerseits die Kathodenfolie und andererseits die Anodenfolie elektrisch leitend verbunden sind. Die Ableiter bilden den Plus- bzw. den Minuspol der Akkuflachzelle.

Die meist aus einer Kupferfolie bestehenden Anodenfolien werden elektrisch leitend mit einem Ableiter verbunden, der durch die Siegelnaht nach außen geführt ist. Entsprechend sind die aus einer Aluminiumfolie bestehenden Kathodenfolien mit einem Ableiter elektrisch leitend verbunden, der durch die Siegelnaht nach außen geführt ist.

Der Erfindung liegt die Aufgabe zugrunde, eine Akkuflachzelle derart auszubilden, dass bei hohen Strömen eine nur geringe Verlustleistung anfällt.

Die Aufgabe wird erfindungsgemäß nach den kennzeichnenden Merkmalen des Anspruchs 1 gelöst.

Der Ableiter für die Kathodenfolien besteht aus Aluminium, wobei in Kontakt mit Luft der Aluminiumableiter auf seiner Außenseite eine Aluminiumoxidschicht ausbildet, die dem Schutz des im Foliengehäuse liegenden inneren Abschnitts des Ableiters dient, der mit der Elektrolytlösung in Kontakt steht. Da die Aluminiumoxidschicht auf dem äußeren Abschnitt des Kathodenableiters die elektrische Kontaktierung stört - die Aluminiumoxidschicht hat einen hohen Übergangswiderstand -, ist im Bereich des äußeren Abschnitts des aus Aluminium bestehenden flächigen Ableiters der Kathodenfolien die Aluminiumoxidschicht vorteilhaft auf beiden Seiten des Ableiters durch eine Beschichtung aus einem elektrisch leitenden Material ersetzt, welches in der Spannungsreihe ein Potenzial aufweist, welches höher ist als das Potenzial von Aluminium. Die elektrisch gut leitende Beschichtung gewährleistet, dass an der Kathode einer Akkuflachzelle eine gute Kontaktierung mit einem niedrigen Übergangswiderstand möglich ist, so dass die Akkuflachzelle auch hohe Ströme bei niedriger Verlustleistung abgeben kann.

Es ist ausreichend, wenn der beschichtete Bereich des äußeren Abschnitts des Kathodenableiters dem Kontaktbereich des Ableiters entspricht. Zweckmäßig wird der Ableiter der Kathodenfolien aber in seinem gesamten äußeren Abschnitt eine Beschichtung aus einem elektrisch leitenden Material tragen, dessen Potenzial in der Spannungsreihe höher ist als das Potenzial von Aluminium.

Der Grundkörper des Kathodenableiters weist somit einen inneren Abschnitt mit einer Aluminiumoxidschicht und einen äußeren Abschnitt mit einer Beschichtung aus einem gut leitenden elektrischen Material auf, wobei die Aluminiumoxidschicht und die Beschichtung in einem Grenzbereich aneinanderstoßen. Dieser Grenzbereich liegt zweckmäßig etwa in Höhe der äußeren Kante der Siegelnaht des Foliengehäuses.

Es kann vorteilhaft sein, den Grenzbereich zwischen der Aluminiumoxidschicht und der äußeren Beschichtung derart anzuordnen, dass er innerhalb der Siegelnaht des Foliengehäuses zu liegen kommt und von dieser verdeckt ist.

Als geeignete Materialien für die Beschichtung des Kathodenableiters ist Nickel, Zinn, Silber oder Gold vorgesehen.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in schematischer Darstellung ein Prinzipbild einer Lithium-Ionen-Akkuzelle,
- Fig. 2: eine perspektivische Darstellung einer Akkuflachzelle gemäß der Erfindung,
- Fig. 3: eine Ansicht einer Akkuflachzelle,
- Fig. 4: einen Schnitt durch die Akkuflachzelle nach Fig. 3 längs der Linie IV-IV.

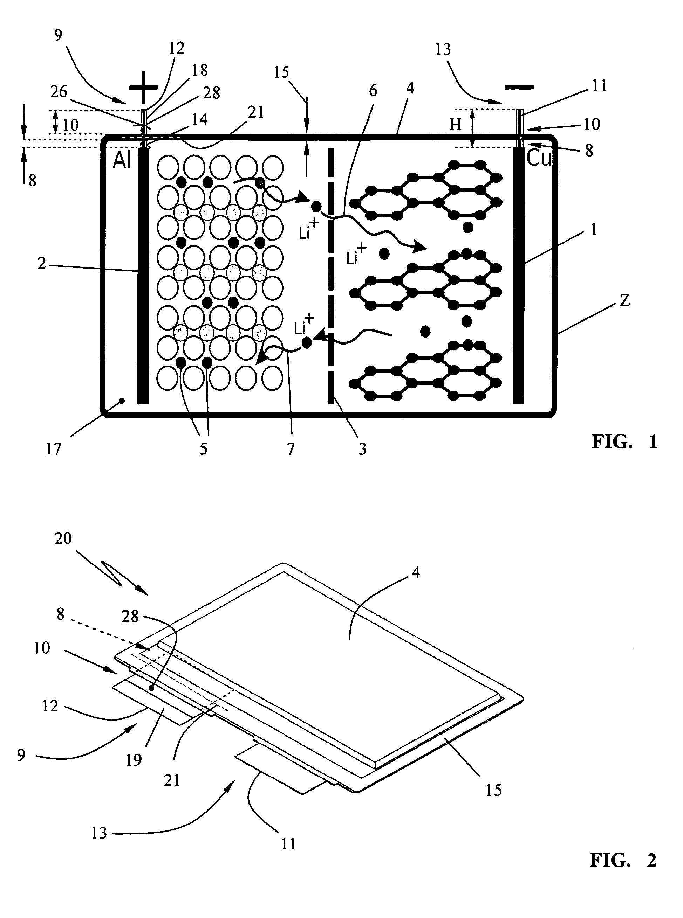

In Fig. 1 ist in einer Prinzipdarstellung der Aufbau einer Lithium-Ionen-Zelle wiedergegeben. Diese besteht aus wechselweise aufeinandergeschichteten Anodenfolien 1 und Kathodenfolien 2, die jeweils durch Separatorfolien 3 voneinander getrennt sind. In der Prinzipdarstellung in Fig. 1 ist eine Zelle Z wiedergegeben, in der die Kathodenfolie 2 und die Anodenfolie 1 als Elektroden innerhalb eines Gehäuses 4, insbesondere eines Foliengehäuses 4 vorgesehen sind. Die Anodenfolie 1 besteht aus Kupfer und ist mit Kohlenstoff (Graphit) beschichtet, während die Kathodenfolie 2 aus einem Aluminiumträger besteht, der ein Metalloxid trägt. Die Lithium-Ionen 5 werden bei einem Ladevorgang in Pfeilrichtung 6 durch die für die Lithium-Ionen 5 durchlässige Separatorfolie 3 in das Graphitgitter eingelagert; beim Entladevorgang fließen die Lithium-Ionen 5 in Pfeilrichtung 7 von der Anode zur Kathode.

In dem Foliengehäuse 4 ist eine nicht wässrige Elektrolytlösung vorgesehen.

Wie in Fig. 1 dargestellt, hat sowohl die Anodenfolie 1 als auch die Kathodenfolie 2 einen elektrischen Ableiter 11 bzw. 12, die die im Foliengehäuse 4 angeordneten Elektroden mit einem äußeren Stromkreis verbinden. Die Ableiter 11, 12 haben eine rechteckige bis quadratische Grundform und sind flächig ausgebildet. Die Seitenflächen der Ableiter 11, 12 dienen der Kontaktierung. Der Ableiter 11 der Anode besteht vorzugsweise aus vernickeltem Kupfer, wobei sich das Material über die gesamte Höhe H des Ableiters 11 erstreckt. Jeder Ableiter 11, 12 besteht dabei aus einem im Foliengehäuse 4 liegenden inneren Abschnitt 8 und einem äußeren Abschnitt 10. Beim Ableiter 11 ist der innere Abschnitt 8 wie der äußere Abschnitt 10 gleich ausgebildet, wobei der vorzugsweise aus vernickeltem Kupfer bestehende Ableiter 11 mit den beschichteten Anodenfolien 1, die zweckmäßig auch aus Kupfer bestehen, elektrisch verbunden ist. Zweckmäßig erfolgt diese Verbindung z. B. durch einen Schweißvorgang, wobei sich ein Ultraschallschweißvorgang als vorteilhaft erwiesen hat.

Die Ausbildung des Ableiters 12 ist aus Aluminium vorgesehen, wobei der innere Abschnitt 8 eine bei Aluminium regelmäßig bei Kontakt mit Luft entstehende äußere Aluminiumoxidschicht 14 aufweist. Der äußere Abschnitt 10 des aus Aluminium bestehenden Ableiters 12 ist nach der Erfindung mit einer ausgewählten Beschichtung versehen. Eine eventuell auf dem Grundkörper des Ableiters 12 entstandene Aluminiumoxidschicht wird im Bereich des äußeren Abschnitts 10 vorteilhaft auf beiden Außenflächen 26 und 28 durch Reinigung entfernt und durch eine Beschichtung aus einem elektrisch gut leitenden Material ersetzt, welches in der Spannungsreihe ein höheres Potenzial aufweist als Aluminium. Dadurch wird ein äußerer Pol 9, der Pluspol, gebildet, der bei Anschluss an einen elektrischen Stromkreis einen geringen Übergangswiderstand aufweist und somit eine elektrisch verlustfreie Kontaktierung gewährleistet. Der Anodenableiter 11 bildet den Minuspol 13.

Vorteilhaft besteht die Beschichtung 18 des Ableiters 12 aus einem Material, welches in der Spannungsreihe nahe dem Material liegt, mit welchem der Ableiter 11 des Gegenpols 13 beschichtet ist. Insbesondere ist bei Verwendung von vernickeltem Kupfer als Ableiter 11 (Pol 13) der Aluminiumableiter 11 (Pol 9) in seinem äußeren Abschnitt 10 vernickelt oder verzinnt.

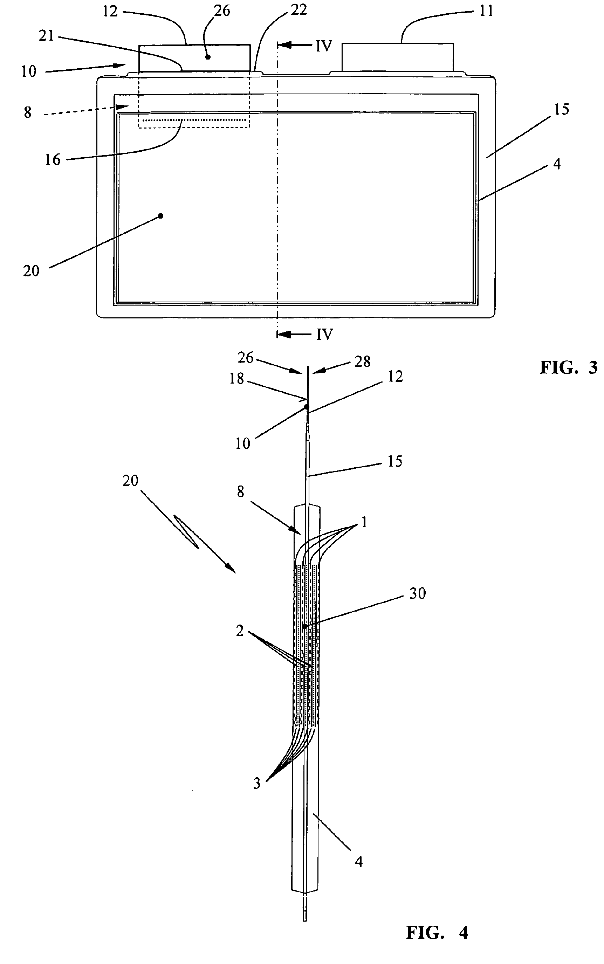

Eine erfindungsgemäße Akkuflachzelle 20 ist beispielhaft schematisch in den Figuren 2 bis 4 wiedergegeben. Wie Fig. 4 zeigt, sind Anodenfolien 1 und Kathodenfolien 2 wechselweise aufeinandergeschichtet und bilden ein Folienpaket 30, wobei zwischen den Folien jeweils eine Separatorfolie 3 angeordnet ist. Es ergibt sich somit eine Stapelung nach der Folge: Anodenfolie 1, Separatorfolie 3, Kathodenfolie 2, Separatorfolie 3, Anodenfolie 1, Separatorfolie 3, Kathodenfolie 2 usw.. Dieses Folienpaket 30 ist in dem Foliengehäuse 4 angeordnet, welches zweckmäßig durch eine umlaufende Siegelnaht verschlossen ist, so dass die im Foliengehäuse 4 eingefüllte nicht wässrige Elektrolytlösung dicht eingeschlossen ist.

Aus dem Foliengehäuse 4 sind die Ableiter 11 und 12 herausgeführt, wobei sie die obere Siegelnaht durchragen. Die Ableiter 11,12 sind an ihren inneren Abschnitten 8 mit den Anodenfolien 1 bzw. Kathodenfolien 2 elektrisch leitend verbunden, was insbesondere durch Schweißen erfolgt. Wie in Fig. 3 dargestellt, sind die aus Aluminium bestehenden Kathodenfolien 2 mittels Schweißpunkten 16 am inneren Abschnitt 8 des Kathodenableiters 12 befestigt, wobei die Schweißpunkte 16 eine innige stoffschlüssige Verbindung zwischen dem Aluminium des Ableiters 12 und dem Aluminium der Kathodenfolie 2 bewirken, so dass ein guter elektrischer Kontakt bei geringem Übergangswiderstand gewährleistet ist.

Der Aluminiumableiter 12 trägt auf seinem inneren Abschnitt 8 eine Aluminiumoxidschicht 14 (Fig. 1), so dass es durch die Elektrolytlösung zu keinen unerwünschten Reaktionen am Ableiter 12 aus Aluminium führen kann. Der äußere Abschnitt 10 des Kathodenableiters 12 aus Aluminium ist dabei so ausgebildet, dass die Aluminiumoxidschicht des Ableiters im Bereich des äußeren Abschnitts 10 durch eine Beschichtung 18 aus einem elektrisch leitenden Material ersetzt ist, welches in der elektrischen Spannungsreihe ein Potenzial aufweist, welches höher ist als das Potenzial von Aluminium.

Da die Beschichtung 18 außerhalb des Innenraums 17 liegt, kann unabhängig von dem Elektrolyt ein für die Kontaktierung geeignetes Material verwendet werden. Die z. B. durch Galvanisieren aufgebrachte Materialschicht ist der Elektrolytlösung nicht ausgesetzt.

Nachstehend ist die Spannungsreihe einiger Metalle wiedergegeben:

| Metall Element | Chemisches Zeichen | Normalpotenzial bei 25° C |
|---|---|---|
| Aluminium | Al³⁺ | -1,66 |
| Zink | Zn²⁺ | -0,76 |
| Chrom | Cr³⁺ | -0,71 |
| Nickel | Ni²⁺ | -0,25 |
| Zinn | Sn²⁺ | -0,14 |
| Kupfer | Cu²⁺ | +0,35 |
| Silber | Ag⁺ | +0,80 |
| Platin | Pt²⁺ | +1,12 |
| Gold | Au³⁺ | +1,50 |

Zweckmäßig erfolgt die Beschichtung des Aluminiumableiters 12 durch Nickel, Zinn, Silber, Gold oder dgl. elektrisch gut leitendes Material bzw. enthält die Beschichtung Metalle wie Nickel, Zinn, Silber, Gold oder dgl.. Vorteilhaft sind die Pole 9, 13 der Ableiter 11, 12 mit dem gleichen Material beschichtet, um die Spannungsdifferenz in der Spannungsreihe der verwendeten Materialien gering zu halten.

Der Grundkörper des Kathodenableiters 12 ist zweckmäßig vor seiner elektrischen Kontaktierung mit den Kathodenfolien 2 derart partiell mit einem elektrisch leitenden Material aus der Spannungsreihe beschichtet, dass beim Zusammenbau der Akkuzelle (Pouchzelle) der beschichtete Abschnitt ausschließlich den äußeren Abschnitt 10 bildet, also der beschichtete Abschnitt nicht in den Innenraum 17 der Akkuflachzelle 4 einragt. Damit ist gewährleistet, dass das für die Beschichtung verwendete Material nicht mit der Elektrolytlösung im Innenraum 17 des Foliengehäuses 4 reagieren kann.

Grundsätzlich ist es ausreichend, wenn lediglich ein Kontaktbereich 19 (Fig. 2) des Ableiters 12 den beschichteten Bereich des äußeren Abschnitts 10 bildet. Über den Kontaktbereich 19 wird eine einzelne Akkuflachzelle 20 mit anderen, benachbarten Akkuflachzellen 20 zusammengeschaltet, um einen Akkupack großer Leistung zu bilden. Durch die Beschichtung im Kontaktbereich 19 ist gewährleistet, dass ein geringer Übergangswiderstand gegeben ist, so dass der Akkupack eine hohe Leistung bereitstellen kann.

Vorteilhaft ist der Ableiter 12 der Kathodenfolien 2 in seinem gesamten äußeren Abschnitt 10 mit einer Beschichtung aus einem elektrisch leitenden Material versehen, dessen Potenzial in der Spannungsreihe höher liegt als das Potenzial von Aluminium. Dabei ist die Ausführung so getroffen, dass der innere Abschnitt 8 mit dem Aluminiumoxid 14 und der äußere Abschnitt 10 mit der Beschichtung 18 in einem Grenzbereich 21 aneinanderstoßen, der etwa auf der Höhe der äußeren Kante 22 des Foliengehäuses 4 liegt.

In einer anderen zweckmäßigen Ausgestaltung ist der Grenzbereich 21 so ausgelegt, dass er in der Siegelnaht 15 des Foliengehäuses 4 zu liegen kommt und von dieser verdeckt ist.

Damit ist sichergestellt, dass in der Zelle ein Abschnitt 8 als reiner Aluminiumableiter liegt und außerhalb der Zelle der beschichtete Abschnitt 10 des Aluminiumableiters. Korrosionen außerhalb der Zelle ist damit entgegengewirkt.

## Patentansprüche

1. Akkuflachzelle, insbesondere Pouchzelle, bestehend aus wechselweise aufeinandergeschichteten Anodenfolien (1) und Kathodenfolien (2), die jeweils durch Separatorfolien (3) voneinander getrennt und in einem Foliengehäuse (4) angeordnet sind, wobei die Anodenfolien (1) mehrerer Lagen und die Kathodenfolien (2) mehrerer Lagen mit je einem Ableiter (11, 12) verbunden sind, der jeweils einen Pol (9, 13) der Akkuflachzelle (20) bildet, wobei der Ableiter (11, 12) einen inneren, innerhalb des Foliengehäuses (4) mit den Anodenfolien (1) oder den Kathodenfolien (2) elektrisch verbundenen inneren Abschnitt (8) sowie einen aus dem Foliengehäuse (4) herausgeführten äußeren Abschnitt (10) aufweist,
**dadurch gekennzeichnet, dass** der Ableiter (12) der Kathodenfolien (2) aus Aluminium besteht und eine Aluminiumoxidschicht trägt, dass in einem Bereich des äußeren Abschnitts (10) die Aluminiumoxidschicht des Ableiters (12) durch eine Beschichtung (18) aus einem elektrisch gut leitenden Material ersetzt ist, welches in der Spannungsreihe ein Potenzial aufweist, welches höher ist als das Potenzial von Aluminium.

2. Akkuflachzelle nach Anspruch 1,
**dadurch gekennzeichnet, dass** der Ableiter (11) auf beiden Außenflächen (26 und 28) die Beschichtung (18) aufweist.

3. Akkuflachzelle nach Anspruch 1 oder 2,
**dadurch gekennzeichnet, dass** der beschichtete Bereich etwa dem Kontaktbereich (19) des Ableiters entspricht.

4. Akkuflachzelle nach einem der Ansprüche 1 bis 3,
**dadurch gekennzeichnet, dass** der Ableiter (12) der Kathodenfolien (2) in seinem gesamten, äußeren Abschnitt (10) eine Beschichtung (18) aus einem elektrisch leitenden Material aufweist, dessen Potenzial in der Spannungsreihe höher liegt als das Potenzial von Aluminium.

5. Akkuflachzelle nach einem der Ansprüche 1 bis 4,
**dadurch gekennzeichnet, dass** der innere Abschnitt (8) mit der Aluminiumoxidschicht (14) und der äußere Abschnitt (10) mit der Beschichtung (18) in einem Grenzbereich (21) aneinanderstoßen, wobei der Grenzbereich (21) etwa auf Höhe der äußeren Kante (22) des Foliengehäuses (4) liegt.

6. Akkuflachzelle nach einem der Ansprüche 1 bis 4,
**dadurch gekennzeichnet, dass** der innere Abschnitt (8) mit der Aluminiumoxidschicht (14) und der äußere Abschnitt (10) mit der Beschichtung (18) in einem Grenzbereich (21) aneinanderstoßen, wobei der Grenzbereich (21) innerhalb der Siegelnaht (15) des Foliengehäuses (4) liegt und von dieser verdeckt ist.

7. Akkuflachzelle nach einem der Ansprüche 1 bis 6,
**dadurch gekennzeichnet, dass** der Grundkörper des Ableiters (8) vor seiner elektrischen Kontaktierung mit den Kathodenfolien (2) partiell mit einem elektrisch leitenden Material beschichtet ist, dessen Potenzial in der Spannungsreihe höher liegt als das Potenzial von Aluminium.

8. Akkuflachzelle nach einem der Ansprüche 1 bis 7,
**dadurch gekennzeichnet, dass** die Beschichtung (18) Nickel, Zinn, Silber oder dgl. Material mit einer guten elektrischen Leitfähigkeit ist.
